# EUROPÄISCHE PATENTANMELDUNG

(11) **EP 4 231 153 A1**
(43) Veröffentlichungstag der Anmeldung: **23.08.2023**
(21) Anmeldenummer: 22157092.2
(22) Anmeldetag: 16.02.2022
(51) Int. Cl.: G06F 11/30, G06F 9/46, G06F 21/12

(54) **CONTAINERLAUFZEITUMGEBUNG MIT VERTEILTEN ÜBERWACHUNGSAUFGABEN UND MINIMALEN PRIVILEGIEN**

(71) Anmelder: Siemens Aktiengesellschaft, 80333 München (DE)
(72) Erfinder: Feist, Christian Peter, 80689 München (DE); Knierim, Christian, 81373 München (DE)
(74) Vertreter: Siemens Patent Attorneys

(57) **Zusammenfassung**

Die Erfindung betrifft eine Containerlaufzeitumgebung (3), aufweisend:
- Container-Applikationsinstanzen (C),
- Container-Überwachungsinstanzen (ET-C),

wobei die Container-Überwachungsinstanzen (ET-C) zur Überwachung der Container-Applikationsinstanzen (C) ausgebildet sind,
wobei die Überwachung der Container-Applikationsinstanzen (C) in Überwachungsaufgaben unterteilt ist,
wobei jeder Überwachungsaufgabe mindestens ein Privileg zugeordnet ist, welches ausschließlich zu einer Ausführung der Überwachungsaufgabe, welcher es zugeordnet ist, befähigt,
wobei die Ausführung der Überwachungsaufgabe eine Durchsetzung eines zugeordneten Regelwerks umfasst,
wobei den Container-Überwachungsinstanzen (ET-C) jeweils eine Überwachungsaufgabe zugewiesen ist und
wobei die Container-Überwachungsinstanzen (ET-C) jeweils über das ihrer Überwachungsaufgabe zugeordnete mindestens eine Privileg verfügen.

Außerdem betrifft die Erfindung ein zugehöriges technisches Gerät (2) und System (6).

## Beschreibung

### HINTERGRUND DER ERFINDUNG

### Gebiet der Erfindung

Die vorliegende Erfindung betrifft eine Containerlaufzeitumgebung sowie ein zugehöriges technisches Gerät und zugehöriges System.

### Beschreibung des Stands der Technik

Container-Instanzen können auf mehrere Arten und Weisen überwacht und eingeschränkt werden. Eine Möglichkeit besteht darin, dass ein privilegierter Prozess außerhalb der Container-Instanz, diese und gegebenenfalls weitere Instanzen überwacht und deren Operationen bei nicht-konformität einschränkt bzw. einen Alarm auslöst.

Im Anwendungsfall von Containerlaufzeitumgebungen, insbesondere Docker, erhalten solche Lösungen zudem oft Zugriff auf eine Schnittstelle, insbesondere ein Docker Socket, über welche Statusinformationen der aktuellen Container-Instanzen abgefragt werden, Ressourcen angelegt werden und somit die volle Kontrolle über die Container-Laufzeitumgebung ermöglicht wird. Diese Überwachungs- und Einschränkungskomponenten können auch als Container-Instanz realisiert werden, welche dann die entsprechenden Privilegien in Form von Zugriffsberechtigungen auf das Docker Socket, insbesondere in Form von Dateisystemberechtigungen oder Prozessberechtigungen der jeweiligen Instanz umfassen und diese insbesondere mit Hilfe von Seccomp-Profilen und Capabilities erweitert oder eingeschränkt werden können, benötigen, was dazu führt, dass diese Container-Instanz auf einer Laufzeitumgebung sehr hoch privilegiert sein muss, um Überwachungen und Einschränkungen durchführen zu können.

Eine andere Möglichkeit der Überwachung und Einschränkung besteht darin, dass die Überwachungskomponente als so genannter Sidecar-Container zur eigentlichen Container-Instanz gestartet wird und durch Teilen entsprechender Linux-Namespaces und Zuweisung von Privilegien insbesondere mit Hilfe von Linux-Capabilities oder Seccomp Profilen überwacht. Nicht-erlaubte Operationen können durch die containerisierte Überwachungskomponente gegebenenfalls unterbunden werden.

Bei den bekannten Ansätzen entstehen folgende Probleme:
- Bei bekannten Implementierungen solcher Überwachungskomponenten wird in einer solchen Instanz eine Vielzahl von Funktionalitäten in eine sehr hoch privilegierte Container-Instanz abgebildet. Die Komponente erhält somit defacto sehr viele Privilegien, welche für unterschiedliche Überwachungsaufgaben gebraucht werden. Im Besonderen erfordern viele bekannte Implementierungen den Zugriff auf das Docker-Socket, mit dem die volle Kontrolle über die Container-Laufzeitumgebung übernommen werden kann.
- Wird die Implementierung einer Überwachungskomponente über einen Sidecar-Container realisiert, erhält der Benutzer, der die eigentliche Workload-Container-Instanz starten möchte, sämtliche Privilegien, die für das Starten des (Überwachungs-)Sidecar-Containers erforderlich sind. Hierdurch kann seitens Betreiber der Laufzeitumgebung nicht durchgesetzt werden, dass der Benutzer, der die Container startet, nur die minimalen Rechte erhält.
- Sofern auf einer Plattform für die Überwachung einer Instanz mehr Ressourcen benötigt werden als der Überwachungskomponente zugewiesen werden, kann dies nur durch dynamische Zuweisung von mehr CPU-/und (Haupt-)Speicher für die Überwachungsinstanz realisiert werden oder durch die Instanz generierten Ereignisse werden bei einer Überlastsituation verworfen bzw. mit einer starken Verzögerung bearbeitet. Eine Skalierung der Überwachungsinstanzen für eine Workload-Container-Instanz ist aktuell nicht bekannt.

Aufgrund der hohen Berechtigungen entsteht das Problem, dass ein Benutzer, in diesem Fall ein Angreifer, bei den beschriebenen Szenarien bei einem erfolgreichen Angriff auf die Überwachungsinstanz sehr weitreichende Berechtigungen erhält, die sich in den meisten Fällen defacto nicht vom darunterliegenden System unterscheiden.

Die Aufgabe der Erfindung besteht darin, eine Lösung für eine verbesserte Überwachung einer Containerlaufzeitumgebung und einer Umsetzung von entgegnenden Maßnahmen im Bedarfsfall.

### ZUSAMMENFASSUNG DER ERFINDUNG

Die Erfindung ergibt sich aus den Merkmalen der unabhängigen Ansprüche. Vorteilhafte Weiterbildungen und Ausgestaltungen sind Gegenstand der abhängigen Ansprüche. Ausgestaltungen, Anwendungsmöglichkeiten und Vorteile der Erfindung ergeben sich aus der nachfolgenden Beschreibung und den Zeichnungen.

Die Erfindung betrifft eine Containerlaufzeitumgebung, aufweisend:
- Container-Applikationsinstanzen,
- Container-Überwachungsinstanzen,

wobei die Container-Überwachungsinstanzen zur Überwachung der Container-Applikationsinstanzen ausgebildet sind,
wobei die Überwachung der Applikationsinstanzen in Überwachungsaufgaben unterteilt ist,
wobei jeder Überwachungsaufgabe mindestens ein Privileg zugeordnet ist, welches ausschließlich zu einer Ausführung der Überwachungsaufgabe, welcher es zugeordnet ist, befähigt,
wobei die Ausführung der Überwachungsaufgabe eine Durchsetzung eines zugeordneten Regelwerks umfasst,
wobei den Container-Überwachungsinstanzen jeweils eine Überwachungsaufgabe zugewiesen ist und
wobei die Container-Überwachungsinstanzen jeweils über das ihrer Überwachungsaufgabe zugeordnete mindestens eine Privileg verfügt.

Ein Aspekt der Erfindung kann somit darin beschrieben werden, dass eine Containerlaufzeitumgebung in Kategorien eingeteilt wird und für jede Kategorie, auch als Segmentierung bezeichenbar, eine eigene Container-Überwachungsinstanzen mit minimal erforderlichen Privilegien gestartet wird.

Nach einem weiteren Aspekt der Erfindung können die Container-Überwachungsinstanzen bei entsprechender Überlastung repliziert werden, d.h., eine Skalierung wird durchgeführt.

Anders ausgedrückt, wird eine Lösung bereitgestellt, mit der die erforderlichen Privilegien für die Überwachung der Containerlaufzeitumgebung durch Segmentierung der einzelnen Funktionen auf einzelne Container-Überwachungsinstanzen reduziert und gleichzeitig eine bessere Skalierbarkeit für diese Container-Überwachungsinstanzen ermöglicht wird.

In einer Weiterbildung der Erfindung ist die Überwachungsaufgabe als:
- Überwachung gestarteter Prozesse,
- Aufbau von Netzwerkverbindungen,
- Überwachung aktiver Netzwerkverbindungen,
- Überwachung von Schreibzugriffen,
- Überprüfen auf Schwachstellen,
- Limitieren von Syscalls,
- Zuweisung von Privilegien und/oder
- Überwachung von Privilegien der Prozesse
ausgebildet.

Das hat den Vorteil, dass die Überwachung der Applikationsinstanzen in Überwachungsaufgaben unterteilt ist. Jeder Überwachungsaufgabe ist mindestens ein Privileg zugeordnet, welches ausschließlich zu einer Ausführung der Überwachungsaufgabe, welcher es zugeordnet, befähigt. Die Ausführung der Überwachungsaufgabe umfasst außerdem eine Durchsetzung eines zugeordneten Regelwerks, wodurch insbesondere Operationen der Applikationsinstanzen bei nicht-konformität einschränkt werden und/oder ein Alarm ausgelöst wird. In dem zugeordneten Regelwerk wird beschrieben, welche Anfragen von einer Container-Überwachungsinstanzen und/oder zu einer Applikationsinstanzen zugelassen werden und/oder bei welchem Zustand einer Applikationsinstanz diese eingeschränkt werden soll. Insbesondere dürfen bei Prozessen keine Prozesse mit bestimmten Prozessprivilegien ausgeführt werden, insbesondere einzelne Komponenten nur gestartet werden, wenn diese keine Schwachstellen aufweisen. Bei gewissen ausgeführten Operationen kann die Instanz auch komplett gestoppt werden, insbesondere Schreibzugriffe auf einen bestimmten Bereich eines Dateisystems.

Darunter betrifft die Überwachung aktiver Netzwerkverbindungen, die Überwachung des stattfindenden Verkehrs. Ein Anwendungsbeispiel wäre insbesondere eine Layer-7-Firewallfunktionalität, bei der man Content-Inspection durchführt. Unter Content-Inspection wird die Überprüfung einer Netzwerk-Verbindung auf Anwendungsebene durch einen Perimeter, wie insbesondere eine Firewall, verstanden. Somit wird sichergestellt, dass nicht nur eine Layer-4-Überprüfung auf Adressen und Port stattfindet, sondern auch das erwartete Anwendungsprotokoll über die Verbindung angewendet wird. Insbesondere wird hierbei überprüft, ob über eine im Perimeter hinterlegte http-Verbindung von beiden Kommunikationspartnern auch das Anwendungsprotokoll http verwendet wird.

Eine ausschließliche Überwachung des Netzwerkverkehrs auf der Transport-Schicht (Layer-4-Firewalling)kann durchgeführt werden, indem der Aufbau von Netzwerkverbindungen überwacht wird, aktuelle Enterprise Firewalls bieten jedoch auch die Überwachung des Verkehrs zur Laufzeit mittels Content-Inspection (Layer-7-Firewalling) an.

In einer weiteren Weiterbildung der Erfindung ist das mindestens eine Privileg dahingehend ausgebildet, dass die Container-Überwachungsinstanzen die ihr zugewiesene Überwachungsaufgabe aber keine weiteren Überwachungsaufgaben ausführen können. Dies hat den Effekt, dass jede Container-Überwachungsinstanz nur minimal nötige Privilegien aufweist.

In einer weiteren Weiterbildung der Erfindung weist eine erste Überwachungsaufgabe der Überwachungsaufgaben einen Aufgabenanteil auf, welcher kein Aufgabenanteil einer zweiten Überwachungsaufgabe ist. Dies hat den Vorteil, dass eine erste Container-Überwachungsinstanz für individuelle Überwachungsaufgaben und zugehörige Regelwerke verantwortlich und privilegiert ist.

In einer weiteren Weiterbildung der Erfindung ist die Überwachungsaufgaben jeweils einen Aufgabenanteil aufweisen, welcher kein Aufgabenanteil der restlichen Überwachungsaufgaben. Dies hat den Vorteil, dass jede Container-Überwachungsinstanz für individuelle Überwachungsaufgaben und zugehörige Regelwerke verantwortlich und privilegiert ist.

In einer weiteren Weiterbildung der Erfindung ist mehreren Container-Überwachungsinstanzen die gleiche Überwachungsaufgabe zugewiesen. Dies ist auch als Skalierung der Container-Überwachungsinstanzen bezeichenbar. Wird für eine Container-Überwachungsinstanz, auch als Enforcer-Typ bezeichenbar, eine Überlastsituation erkannt, insbesondere Anzahl der Applikationsinstanzen, auch als Workload-Container bezeichenbar, Anzahl der aufgebauten Netzwerkverbindungen in einem bestimmten Zeitfenster, kann eine Enforcer-Orchestrierungsinstanz eine weitere Enforcer-Instanz des gleichen Typs nachstarten und eine Loadbalancer-Funktionalität bereitstellen. Die Skalierung ist somit auf einen eigenen Orchestrierer, der Enforcer-Orchestrierungsinstanz, für die Überwachungsinstanz auslagert und von einem normalen Orchestrierer, der die Skalierung der Applikationsinstanzen durchführt, getrennt.

Problem bei einem gemeinsamen Orchestrierer für Überwachungs- und Applikationsinstanzen ist, dass dieser zur Übergabe von Orchestrierungsinformationen weit exponiert werden müsste. Das Trennen vom normalen Orchestrierer bietet den Vorteil, dass dieser besser abgesichert werden kann.

Beide Orchestrierer, jener für Überwachungs- und jener Applikationsinstanzen, können außerdem als privilegierte Container-Instanzen ausgeprägt sein, sind aber typischerweise eigenständige Systeme.

Die Loadbalancer-Funktionalität kann abhängig vom Typ gegebenenfalls durch das Nachstarten eines entsprechenden Containers oder einer Loadbalancer-Ressource, die vom Orchestrierer verwaltet wird, sichergestellt werden, welcher diese Funktionalität auf Applikationsseite wahrnimmt.

In einer weiteren Weiterbildung der Erfindung sind den Container-Überwachungsinstanzen zumindest teilweise jeweils mehrere Überwachungsaufgaben zugewiesen. Diese Ausführung betrifft nur wenig komplexe zusammenhängende Aufgaben, welche sich aufgrund der hierfür nötigen Privilegien verbinden lassen. Kern der Erfindung ist die Unterteilung in Überwachungsaufgaben und Verteilung minimal nötiger Privilegien.

In einer weiteren Weiterbildung der Erfindung läuft die Container-Laufzeitumgebung auf:
- einem industriellen System,
- einem industriellen Computer,
- einem industriellen Gerät,
- einem Computer,
- ein mobiles Gerät,
- einem Steuergerät,
- einem Gerät einer Internet-of-Things-Umgebung,
- einem Edge-Gerät,
- einem Server und/oder
- einem Cloud-Server.

Die Erfindung umfasst außerdem ein technisches Gerät aufweisend die erfindungsgemäße Containerlaufzeitumgebung. Die erfindungsgemäße Containerlaufzeitumgebung kann insbesondere als Docker-Laufzeitumgebung ausgebildet sein.

Die Erfindung umfasst außerdem ein System, aufweisend:
- ein erfindungsgemäßes technisches Gerät und
- ein übergeordnetes Management-System das dem technischen Gerät zugeordnet ist.

In einer weiteren Weiterbildung der Erfindung ist die Container-Überwachungsinstanzen von einer speziell hierfür ausgebildeten Skalierungskomponente, insbesondere einer Überwacher-Orchestrierungsinstanz, auch als Enforcement-Orchestrierer-Instanz bezeichenbar, des übergeordneten Management-System, gestartet worden. Dies hat den Vorteil, dass die Skalierungskomponente speziell zum Starten der Container-Überwachungsinstanzen ausgebildet ist und dies nicht von der Skalierungskomponente, welche für die Workload-Instanzen verantwortlich ist, durchgeführt wird.

In einer weiteren Weiterbildung der Erfindung ist die Container-Überwachungsinstanzen von einer speziell hierfür ausgebildeten Skalierungskomponente, welche innerhalb der Containerlaufzeitumgebung ausgebildet ist, gestartet worden. Dies hat den Vorteil, dass die Skalierungskomponente als Container-Instanz ausgebildet ist.

In einer weiteren Weiterbildung der Erfindung ist die Skalierungskomponente ausgebildet, in Abhängigkeit einer Auslastung der Container-Überwachungsinstanzen weitere Container-Überwachungsinstanzen mit gleichen Überwachungsaufgaben zu starten.

Dies hat den Vorteil, dass die Entscheidung, welche und wie viele Überwachungsinstanzen gestartet werden sollen, von einer zentralen, insbesondere auch einer nur der jeweiligen Instanz zugewiesenen, Enforcer-Orchestrierungsinstanz, auch als Überwacher-Orchestrierer-Instanz bezeichenbar, oder bei orchestrierten Lösungen wie Kubernetes von dem Workload-Orchestrierer selbst entschieden wird.

Diese Enforcer-Orchestrierungsinstanz erhält lediglich die Berechtigung die Enforcer-Richtlinie zu interpretieren, um zu entscheiden, welche unterschiedlichen Überwachungsinstanzen benötigt werden und ggf. weitere Instanzen mit den entsprechenden minimalen Berechtigungen zu starten und zu überwachen. Ansonsten ist sie nicht weiter exponiert und hat keine weiteren Verbindungen und Funktionen.

In einer weiteren Weiterbildung der Erfindung wird von der Skalierungskomponente eine Überwachungsinstanzen-Richtline herangezogen.

Wird für einen Enforcer-Typ eine Überlastsituation erkannt (insbesondere Anzahl der Workload-Container, Anzahl der aufgebauten Netzwerkverbindungen in einem bestimmten Zeitfenster), kann die Enforcer-Orchestrierungsinstanz eine weitere Enforcer-Instanz des gleichen Typs nachstarten und eine Loadbalancer-Funktionalität zur Verteilung der Aufgaben zwischen den Enforcer-Instanzen des Typs bereitstellen. Die Loadbalancer-Funktionalität kann abhängig vom Typ ggf. durch das Nachstarten eines entsprechenden Containers oder der Einbindung von der Enforcer-Instanz bzw. Überwachungsinstanz verwalteten Loadbalancer-Ressource sichergestellt werden, welcher diese Funktionalität auf Applikationsseite wahrnimmt.

Alternativ kann die Loadbalancer-Funktionalität innerhalb des Kernels implementiert werden, indem die zur Analyse erforderlichen eBPF-Programme oder Kernel-Module die Informationen zu den durch die Workload-Instanzen durchgeführte Operationen abwechselnd an die jeweiligen Enforcer-Instanzen weiterleiten. Sobald eine Skalierung erfolgt (d.h. eine weitere Container-Instanz wird bereitgestellt), muss somit der Enforcer-Orchestrierer wissen, welche Schnittstellen zum Auslesen der Daten erforderlich sind und diesen mitteilen, an welche Instanzen die Informationen zu übergeben sind. Diese Anpassung kann insbesondere durch das Laden zusätzlicher eBPF Programme oder mit Hilfe entsprechender Konfigurationsschnittstellen der für das Ausleiten/Bereitstellen der Informationen verwendeten Kernel-Module durchgeführt werden.

Weiterhin wird von dem Enforcer-Orchestrierer eine Enforcer-Richtlinie verwendet in der definiert wird, welche Enforcer-Typen (= ET; insbesondere ET A zum Überprüfen von read() Systemaufrufen aller Workload-Container) verwendet werden sollen, wann ein bestimmter Enforcer skaliert werden soll (z.B. ein zusätzlicher ET A' pro vier Workload-Container), oder welche Apps speziell mit einem Enforcer-Typ überwacht werden sollen (insbesondere soll in der Netzwerkverkehr von Apps, die von Drittanbietern stammen, mittels der Sidecar-Container ET C überwacht werden). Die Richtlinie der einzelnen Enforcer-Typen wird zusammen mit diesen bereitgestellt. Beispielsweise können die Enforcer selbst als Container realisiert werden, womit die Policy insbesondere als Teil des Container-Images für den Enforcer-Typ mitgeliefert werden kann.

Soll ein bestimmter Enforcer-Typ auf dem System gestartet werden, richtet der Enforcer-Agent zunächst die entsprechenden Schnittstellen, die die zu analysierenden Daten bereitstellen, ein. Dies kann z.B. das Laden eines Kernel-Moduls und eines eBPF-Programmes umfassen. In der obigen Ausführungsform werden vor dem Starten eines Enforcer-Containers von Typ B, der verwendet wird um zu überwachen, welche Prozesse in Containern gestartet werden und welche Linux Capabilities sie benutzen, eBPF Programme oder Kernel-Module zum Ausleiten der von Containern ausgeführten exec*() Systemaufrufe sowie Kernel-internen capable() Funktionen geladen. Der Enforcer-Container von Typ B verwendet die nun vorhandenen Schnittstellen, die insbesondere als virtuelle Dateien im Falle eines Kernel-Moduls zur Verfügung stehen, um die Informationen zu erhalten und anschließend auszuwerten.

Der Enforcer-Agent kann als Orchestrierungsbackend ausgeführt sein, das als eigenständiger Prozess für den Enforcer bereitgestellt wird oder auch als Container-Instanz bereitgestellt werden und ausgeführt werden. Um sicherzustellen, dass dieser vor den Enforcer-Containern ausgeführt wird, kann dieser insbesondere durch den Administrator auf den relevanten Systemen vor Einrichtung der Funktionalität händisch eingerichtet werden. Beim Anwendungsbeispiel Kubernetes gibt es hierfür so genannte Daemon Sets, die sicherstellen, dass auf allen relevanten Systemen die jeweiligen Agenten betrieben werden.

Wird eine Bedingung zum Skalieren eines Enforcer-Typs erfüllt, z.B. Skalieren von ET A in dem dargestellten Beispiel, da z.B. das Verarbeiten der vielen read()-Systemaufrufe mit zunehmender Anzahl von Workload-Containern immer aufwändiger wird, passt der Enforcer-Agent die entsprechende Schnittstelle so an, dass diese nun von mehreren Enforcer-Containern verwendet werden kann. Die Daten können dabei z.B. zufällig oder wechselweise entweder ET A oder ET A' zur Verfügung gestellt werden (einfaches Load-Balancing). Denkbar ist auch, dass den Enforcer-Containern die Systemaufruf-Daten bestimmter Workload-Container zugeordnet werden. Das Anpassen der Schnittstellen kann insbesondere im Falle von eBPF Programmen durch das Laden weiterer eBPF Programme durchgeführt werden.

In einer weiteren Weiterbildung der Erfindung weist das erfindungsgemäße System außerdem auf:
- einen Überwachungsagenten, welcher ausgebildet ist,
   o eine Schnittstelle zwischen der Skalierungskomponente und den Container-Überwachungsinstanzen und/oder
   o eine Schnittstelle zwischen Datenquellen und den Container-Überwachungsinstanzen, über welche die Container-Überwachungsinstanzen Daten zur Durchführung ihrer Überwachungsaufgabe beziehen,
   herzustellen.

In einer weiteren Variante soll es möglich sein, dass bei Software-Updates für einzelne Enforcer-Komponenten zwei Instanzen gleichen Typs mit unterschiedlichen Versionen gestartet werden und entsprechende Syscalls und/oder für das Enforcement relevanten Datenströme parallel an beide Versionen für einen in der Richtline zu definierendem Zeitraum (z.B. eine Stunde) ausgeleitet werden und die Ergebnisse von einer ebenfalls von der Enforcer-Orchestrierungskomponente im Kernel aktivierten Vergleicherkomponente verglichen werden.

Hierzu bestehen zumindest zwei Möglichkeiten. In einer ersten Alternative setzt die erste alte, bisherige Version durch, die zweite neugestartete Instanz überwacht ebenfalls und setzt nicht durch, sie befindet sich somit im Auditmodus und die Ergebnisse werden verglichen. In einer zweiten Alternative setzen die alte bisherige und die neue Version nicht durch und auditieren nur. Die Vergleicher-Komponente wird in beiden Fällen als zusätzliche Instanz gestartet, die die beiden Enforcer-Versionen überwacht und/oder die Ergebnisse gemeldet bekommt.

Die Vergleicher-Komponente vergleicht die Ergebnisse. Sind die Ergebnisse identisch, sorgt die Vergleicherkomponente dafür, dass die erzeugten Kommandos der neuen Version als erfolgreich zurückgemeldet werden, obwohl diese nicht ausgeführt wurden. Wird eine Abweichung zwischen beiden Enforcer-Containern festgestellt, wird neben dem Filtern des Syscalls zusätzlich ein Alarm an die Enforcer-Orchestrierer-Komponente geschickt.

Diese kann dann unterbinden, dass die neue Version der Enforcer-Komponente ausgerollt wird und die alte Version aktiv bleibt. Der Administrator für die Enforcer-Komponenten kann dann entscheiden, ob ein Update dennoch durchgeführt wird oder zum Beispiel mit dem Hersteller zunächst klären, ob das geänderte Verhalten gewünscht ist und keine negativen Auswirkungen auf die eingeschränkten Applikationskomponenten haben oder zur Sicherstellung eines problemlosen Applikationsbetriebes eine Konfigurationsänderung innerhalb der neuen Enforcer-Version erforderlich ist.

Weiterhin ist denkbar, um bei einem Update eines Enforcer-Typs keine Security-Events zu verlieren, sondern einen nahtlosen Übergang zu ermöglichen, Enforcer-Container der alten, sowie der neuen Variante zunächst parallel laufen zu lassen. Dabei würden sie die gleichen Daten parallel verarbeiten. Liefern die Enforcer-Versionen unterschiedliche Ergebnisse zu einem Ereignis, wird das Ergebnis des neuen Enforcers verwendet. Ab einem bestimmten Zeitpunkt kann die alte Version dann angehalten werden.

In einer weiteren Weiterbildung des erfindungsgemäßen Systems wurden die Container-Applikationsinstanzen von einer Applikations-Orchestrierungsinstanz gestartet, welche nicht ausgebildet ist, um die Container-Überwachungsinstanzen zu starten.

Grundsätzlich können beide Orchestrierungskomponenten auch in einer Orchestrierungskomponente zusammengefasst werden, ebenso wie die entsprechenden Agenten auf dem Zielsystem.

Eine Trennung ist dann vorteilhaft, wenn diese z.B. auf unterschiedlichen Systemen ausgeführt oder durch unterschiedliche Administratoren verwaltet werden sollen. Wird die Verbindung zwischen Enforcer-Orchestriererinstanz und einem entsprechenden Agenten unterbrochen, kann die Enforcer-Orchestriererinstanz dies an die Workload-Orchestrierungsinstanz melden und somit beispielsweise veranlassen, dass die Workload-Container auf ein anderes Zielsystem mit funktionsfähigem und erreichbarem Enforcer-Agenten migriert werden. Insbesondere ist eine Trennung auch in Fällen vorteilhaft, dass auch zentrale Komponenten eines Enforcer- Orchestrierers, insbesondere Services zum Abrufen von Credentials, nicht zu den Workload-Containern hin exponiert werden müssen und somit das Risiko einer Kompromittierung durch die Container minimiert wird. Gleiches gilt für die Schnittstellen zum Benutzer (Administrator) der Orchestrierer API. Man kann so den normalen Orchestrierer für eine größere Benutzergruppe öffnen und erlaubt auf den Enforcer-Orchestrierer nur Zugriffe aus einem speziellen Admin-Netzwerk.

Typischerweise orchestriert ein Orchestrierer nicht nur eine Laufzeitumgebung, sondern mehrere Laufzeitumgebungen auf unterschiedlichen Systemen.

Vorteile der Aufteilung in unterschiedliche Enforcer-Typen sind:
- Enforcer-Container benötigen weniger Rechte, da sie nur für das Überwachen und/oder Einschränken bestimmter Workload-Container Aktionen/Ereignisse verantwortlich sind.
- Bestimmte Überwachungs-Aufgaben, bei denen mehr Ereignisse verarbeitet werden müssen als bei anderen Überwachungsaufgaben, können durch ein Skalieren von Enforcer-Instanzen zuverlässiger und mit geringerer Verzögerung durchgeführt werden.
- Orchestrierungsfunktionen für die Enforcer werden von der eigentlichen Workload-Orchestrierung getrennt. Hierdurch können Sicherheitsfunktionalitäten auf einer orchestrierten Infrastruktur besser gegenüber den Workload-Containern als auch gegenüber den Workload-Administratoren geschützt werden.
- Unterschiede im Verhalten einzelner Enforcer-Typen bzgl. der Einschränkung von Workload-Containern können über einen definierten Zeitraum mit der alten Version verglichen werden und erst nach einem definierten Zeitraum aktiviert werden. Dies ist besonders für kritische Applikationen vorteilhaft, da das Risiko, dass ein Hersteller eines Enforcers eine fehlerhafte Version ausliefert und diese Auswirkungen auf die Applikation hat, minimiert werden kann. Gleiches gilt, wenn per Design eine neue Enforcer-Version ein neues Verhalten aufweist und hierdurch die Konfiguration geändert werden muss.

### KURZE BESCHREIBUNG DER ZEICHNUNGEN

Die Besonderheiten und Vorteile der Erfindung werden aus den nachfolgenden Erläuterungen mehrerer Ausführungsbeispiele anhand der schematischen Zeichnungen ersichtlich.

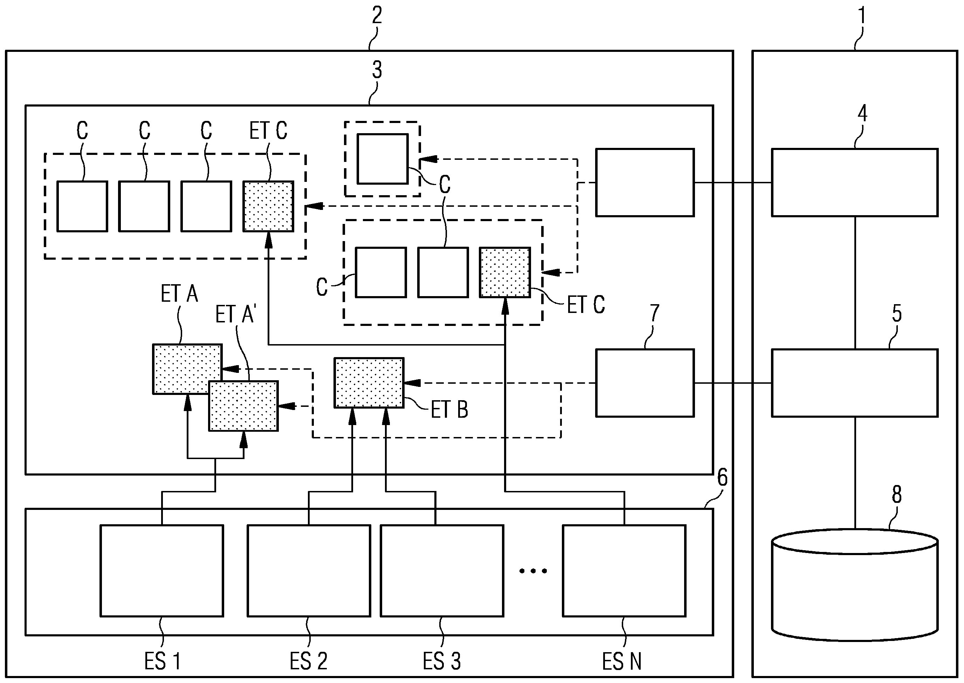

Es zeigt
- Fig. 1: ein erfindungsgemäßes System.

### DETAILLIERTE BESCHREIBUNG DER ERFINDUNG

Fig. 1 zeigt ein erfindungsgemäßes System 6, aufweisend:
- ein technisches Gerät 2 und
- ein übergeordnetes Management-System 1 das dem technischen Gerät 2 zugeordnet ist. Dem Management-System 1 können außerdem weitere technische Geräte zugeordnet sein.

Das technische Gerät 2 weist eine Containerlaufzeitumgebung 3 auf. Die Containerlaufzeitumgebung 3 weist Container-Applikationsinstanzen C und Container-Überwachungsinstanzen ET-C auf.

Die Container-Überwachungsinstanzen ET-C sind zur Überwachung der Container-Applikationsinstanzen C ausgebildet. Die Überwachung der Container-Applikationsinstanzen C ist in Überwachungsaufgaben unterteilt, wobei jeder Überwachungsaufgabe mindestens ein Privileg zugeordnet ist, welches ausschließlich zu einer Ausführung der Überwachungsaufgabe, welcher es zugeordnet ist, befähigt. Die Ausführung der Überwachungsaufgabe umfasst außerdem eine Durchsetzung eines zugeordneten Regelwerks.

Den Container-Überwachungsinstanzen ET-C ist jeweils eine Überwachungsaufgabe zugewiesen, wobei die Container-Überwachungsinstanzen ET-C jeweils über das ihrer Überwachungsaufgabe zugeordnete mindestens eine Privileg verfügen.

Die Container-Überwachungsinstanzen ET-C wurden von einer speziell hierfür ausgebildeten Skalierungskomponente 5, insbesondere einer Überwacher-Orchestrierungsinstanz 5 des übergeordneten Management-System 1 gestartet.

Die Skalierungskomponente 5 ist ausgebildet, in Abhängigkeit einer Auslastung der Container-Überwachungsinstanzen ET-C weitere Container-Überwachungsinstanzen ET-C mit gleichen Überwachungsaufgaben zu starten.

Von der Skalierungskomponente 5 wird eine Überwachungsinstanzen-Richtline 8 zum Skalieren der Container-Überwachungsinstanzen ET-C herangezogen.

Das System 6 weisend außerdem einen Überwachungsagenten 7 auf, welcher ausgebildet ist, eine Schnittstelle zwischen der Skalierungskomponente und den Container-Überwachungsinstanzen ET-C und/oder eine Schnittstelle zwischen Datenquellen und den Container-Überwachungsinstanzen ET-C, über welche die Container-Überwachungsinstanzen ET-C Daten zur Durchführung ihrer Überwachungsaufgabe beziehen, herzustellen.

Die Container-Applikationsinstanzen C, auch als Apps bezeichenbar, wurden von einer Applikations-Orchestrierungsinstanz 4 gestartet, welche nicht ausgebildet ist, um die Container-Überwachungsinstanzen ET-C zu starten.

In Fig. 1 steht "ES" für "Event sources", welche dahingehend geprüft werden, ob ein Event auf dem Betriebssystem ("OS Kernel") stattfinden darf oder nicht. "ET" steht für Enforcer-Type.

Obwohl die Erfindung im Detail durch die Ausführungsbeispiele näher illustriert und beschrieben wurde, ist die Erfindung durch die offenbarten Beispiele nicht eingeschränkt und andere Variationen können vom Fachmann daraus abgeleitet werden, ohne den Schutzumfang der Erfindung zu verlassen.

## Patentansprüche

1. Containerlaufzeitumgebung (3), aufweisend:
- Container-Applikationsinstanzen (C),
- Container-Überwachungsinstanzen (ET-C),
wobei die Container-Überwachungsinstanzen (ET-C) zur Überwachung der Container-Applikationsinstanzen (C) ausgebildet sind,
wobei die Überwachung der Container-Applikationsinstanzen (C) in Überwachungsaufgaben unterteilt ist,
wobei jeder Überwachungsaufgabe mindestens ein Privileg zugeordnet ist, welches ausschließlich zu einer Ausführung der Überwachungsaufgabe, welcher es zugeordnet ist, befähigt, wobei die Ausführung der Überwachungsaufgabe eine Durchsetzung eines zugeordneten Regelwerks umfasst,
wobei den Container-Überwachungsinstanzen (ET-C) jeweils eine Überwachungsaufgabe zugewiesen ist und
wobei die Container-Überwachungsinstanzen (ET-C) jeweils über das ihrer Überwachungsaufgabe zugeordnete mindestens eine Privileg verfügen.

2. Containerlaufzeitumgebung (3) nach Anspruch 1, wobei die Überwachungsaufgabe als:
- Überwachung gestarteter Prozesse,
- Aufbau von Netzwerkverbindungen,
- Überwachung aktiver Netzwerkverbindungen,
- Überwachung von Schreibzugriffen,
- Überprüfen auf Schwachstellen,
- Limitieren von Syscalls,
- Zuweisung von Privilegien und/oder
- Überwachung von Privilegien der Prozesse ausgebildet ist.

3. Containerlaufzeitumgebung (3) nach einem der vorhergehenden Ansprüche,
wobei das mindestens eine Privileg dahingehend ausgebildet ist, dass die Container-Überwachungsinstanzen (ET-C) die ihr zugewiesene Überwachungsaufgabe aber keine weiteren Überwachungsaufgaben ausführen können.

4. Containerlaufzeitumgebung (3) nach einem der vorhergehenden Ansprüche,
wobei eine erste Überwachungsaufgabe der Überwachungsaufgaben einen Aufgabenanteil aufweist, welcher kein Aufgabenanteil einer zweiten Überwachungsaufgabe ist.

5. Containerlaufzeitumgebung (3) nach einem der vorhergehenden Ansprüche,
wobei die Überwachungsaufgaben jeweils einen Aufgabenanteil aufweisen, welcher kein Aufgabenanteil der restlichen Überwachungsaufgaben ist.

6. Containerlaufzeitumgebung (3) nach einem der vorhergehenden Ansprüche,
wobei mehreren Container-Überwachungsinstanzen (ET-C) die gleiche Überwachungsaufgabe zugewiesen ist.

7. Containerlaufzeitumgebung (3) nach einem der vorhergehenden Ansprüche,
wobei den Container-Überwachungsinstanzen (ET-C) zumindest teilweise jeweils mehrere Überwachungsaufgaben zugewiesen sind.

8. Containerlaufzeitumgebung (3) nach einem der vorhergehenden Ansprüche,
wobei die Containerlaufzeitumgebung (3) auf:
- einem industriellen System (2),
- einem industriellen Computer (2),
- einem industriellen Gerät (2),
- einem Computer (2),
- ein mobiles Gerät (2),
- einem Steuergerät (2),
- einem Gerät einer Internet-of-Things-Umgebung (2),
- einem Edge-Gerät (2),
- einem Server (2) und/oder
- einem Cloud-Server (2)
läuft.

9. Technisches Gerät (2) aufweisend die Containerlaufzeitumgebung (3) nach einem der Ansprüche 1 bis 8.

10. System (6), aufweisend:
- ein technisches Gerät (2) nach Anspruch 9 und
- ein übergeordnetes Management-System (1) das dem technischen Gerät (2) zugeordnet ist.

11. System (6) nach Anspruch 10,
wobei die Container-Überwachungsinstanzen (ET-C) von einer speziell hierfür ausgebildeten Skalierungskomponente (5), insbesondere einer Überwacher-Orchestrierungsinstanz (5) des übergeordneten Management-System (1), gestartet wurden oder wobei die Container-Überwachungsinstanzen (ET-C) von einer speziell hierfür ausgebildeten Skalierungskomponente (5), welche innerhalb der Containerlaufzeitumgebung (3) ausgebildet ist, gestartet wurden.

12. System (6) nach Anspruch 10,
wobei die Skalierungskomponente (5) ausgebildet ist, in Abhängigkeit einer Auslastung der Container-Überwachungsinstanzen (ET-C) weitere Container-Überwachungsinstanzen (ET-C) mit gleichen Überwachungsaufgaben zu starten.

13. System (6) nach einem der Ansprüche 10 bis 12,
wobei von der Skalierungskomponente (5) eine Überwachungsinstanzen-Richtline (8) herangezogen wird.

14. System (6) nach einem der Ansprüche 10 bis 13,
außerdem aufweisend:
- einen Überwachungsagenten (7), welcher ausgebildet ist,
o eine Schnittstelle zwischen der Skalierungskomponente und den Container-Überwachungsinstanzen (ETC) und/oder
o eine Schnittstelle zwischen Datenquellen und den Container-Überwachungsinstanzen (ET-C), über welche die Container-Überwachungsinstanzen (ET-C) Daten zur Durchführung ihrer Überwachungsaufgabe beziehen,
herzustellen.

15. System (6) nach einem der Ansprüche 10 bis 14,
wobei die Container-Applikationsinstanzen (C) von einer Applikations-Orchestrierungsinstanz (4) gestartet wurden, welche nicht ausgebildet ist, um die Container-Überwachungsinstanzen (ET-C) zu starten.
